# EUROPÄISCHE PATENTANMELDUNG

(11) **EP 0 981 124 A2**
(43) Veröffentlichungstag der Anmeldung: **23.02.2000**
(21) Anmeldenummer: 99250201.3
(22) Anmeldetag: 19.06.1999
(51) Int. Cl.: G09F 9/33

(54) **Led-Anzeigeeinheit**

(30) Priorität: 19.08.1998 DE 29815266 U
(71) Anmelder: DaimlerChrysler AG, 70546 Stuttgart (DE)
(72) Erfinder: Berg, Bärbel, 10779 Berlin (DE); Risch, René, 13599 Berlin (DE); Dolata, Thomas, 13089 Berlin (DE); Zach, Renee, 12249 Berlin (DE)
(74) Vertreter: Lindner-Vogt, Karin

(57) **Zusammenfassung**

Die Frontscheibe einer LED-Anzeigeeinheit ist zwecks Erzeugung eines Layouts in Schichten bedruckt. Indem auch die Sichtfenster für die eigentlichen LED-Module schwarz, aber lichtdurchlässig bedruckt sind, entfällt die bisher übliche Filterscheibe aus eingefärbtem
n Kunststoff zwischen den LED-Modulen und der Frontscheibe. Die Erfindung ist beispielsweise im öffentlichen Personennahverkehr einsetzbar.

## Beschreibung

Die Erfindung betrifft eine LED (Lichtemissionsdioden)-Anzeigeeinheit für den mobilen oder stationären Einsatz im Innen- oder Außenbereich, vorzugsweise eine LED-Linienverlaufsanzeige für den öffentlichen Personennahverkehr.

Im öffentlichen Personennahverkehr dienen Linienverlaufsanzeigen in Fahrzeugen zur ständigen Information der Fahrgäste über den gerade befahrenen Streckenabschnitt innerhalb der Linie bzw. über den nächsten Halt.

Als Anzeigemittel haben sich LED-Matrix-Displays aufgrund ihrer hohen Leuchtkraft und damit Wahrnehmbarkeit und Erkennbarkeit bewährt.

Zur Verbesserung der Ablesbarkeit einer LED-Anzeige ist es bekannt, zwischen die eigentlichen LED-Module und die schützende Glasfrontscheibe eine grau eingefärbte Kunststoff-Filterscheibe mit einer solchen Lichtundurchlässigkeit zu setzen, die einerseits bewirkt, daß sich die Blendwirkung verringert und das Schriftbild ruhiger erscheint, andererseits aber die Leuchtkraft nicht erheblich beeinträchtigt. Die LED-Anzeigen werden hierdurch allerdings recht kostenintensiv, da mit der Kunststoffilterfolie nicht nur ein zusätzliches Bauteil zu fertigen ist, sondern auch zu halten und zu montieren ist.

Außerdem neigt, bedingt durch die Betriebstemperatur der LED-Module, die Kunststoff-Filterscheibe zur Welligkeit und beeinträchtigt somit ihrerseits die Ablesbarkeit negativ. Weiterhin muß beim Fixieren dieser Kunststoffilterscheibe der im Vergleich zum Glas oder Gehäuse größere Ausdehnungskoeffizient berücksichtigt werden, der ohne besondere Vorkehrungen ein zusätzliches Verwerfen verursachen würde. Hinzu kommt bei Außenanlagen, daß sich durch UV-Strahlung die Kunststoffolien im Laufe der Zeit im Farbton und in der Festigkeit ungünstig verändern. Auch läßt die Servicefreundlichkeit Wünsche offen, da für das Auswechseln eines defekten LED-Moduls recht aufwendige Demontageund Montagearbeiten anfallen.

Der Erfindung liegt deshalb die Aufgabe zugrunde, eine LED-Anzeigeeinheit zu erstellen, die einfacher und damit kostengünstiger herstellbar ist, beständiger gegen Betriebs- und Umwelteinflüsse aller Art ist und damit bahntauglich wird und die den gestiegenen Anforderungen an zeitsparende Wartung- und Reparaturarbeiten besser als bisher entspricht.

Die Aufgabe wird erfindungsgemäß durch die im Anspruch 1 angegebenen Merkmale gelöst. Vorteilhafte Ausgestaltungen der Erfindung geben die begleitenden Unteransprüche an.

An sich ist es bereits bekannt, die Frontscheibe von LCD (Liquid crystal display)-Anzeigen mehrschichtig zu bedrucken, jedoch kann und muß hier das Sichtfenster selbst glasklar gehalten werden (DE 295 09 016 U1). Eine vorgesetzte, eingefärbte Kunststoffolie oder eine im Bereich des Sichtfensters schwarz-bedruckte Frontscheibe würde die Ablesbarkeit der passiven und damit leuchtschwächeren Flüssigkristallelemente, die im übrigen aber bereits ein sehr ruhiges Bild liefern, nur erschweren.

Anhand eines Ausführungsbeispiels soll die Erfindung mitsamt ihren Vorteilen näher dargestellt werden. In der zugehörigen Zeichnung ist schematisiert die Frontscheibe einer Linienverlaufsanzeige für das Innere eines Wagens gezeigt. Die Frontscheibe besteht im Beispiel aus klarem, ungetönten Einscheiben-Sicherheitsglas und ist von hinten in mehreren Schritten zur Herstellung des gewünschten Layouts im elektrostatischen Siebdruckverfahren bedruckt. Im ersten Druckschritt werden feste Aufschriften zur Art der Information aufgebracht wie: "Nächster Halt", "Umsteigen", "Endhaltestelle", "Linie". Zur besseren Lesbarkeit für die Fahrgäste sind diese Schriftzüge kontrastintensiv, vorzugsweise in schwarzer Farbe und lichtundurchlässig gehalten. In einer anderen Farbe, beispielsweise papyrusweiß, können in einem zweiten Druckgang Zusatzinformationen und Gestaltungselemente gedruckt werden, wie die Aufschrift "Linienverlauf", die Displayeinfassung und ein Firmenkennzeichen. Insbesondere erhalten hierdurch auch die erstgenannten Aufschriften eine weiße Hinterlegung In einem dritten Druckgang wird im Anschluß die Frontscheibe mit ihrer Grundfarbe bedruckt, beispielsweise wieder lichtundurchlässig schwarz, wobei die Sichtfenster (S) für die Displayanzeigen hiervon ausgespart bleiben. Diese werden im letzten Druckschritt in beispielsweise RAL 9005 tiefschwarz , aber mit einer gewissen Lichtdurchlässigkeit bedruckt, wobei diese insbesondere in Abhängigkeit von der Größe, Helligkeit und Farbe der verwendeten LED, dem Anbringungsort der Anzeige und den vorzufindenden Einsatzbedingungen durch einige wenige Versuche leicht zu optimieren ist.

In einer Weiterbildung der Erfindung wird anstelle bedruckter Sichtfenster (S) eine Frontscheibe eingesetzt, deren Glas bereits im Herstellungsprozeß schwärzlich getönt wird. Hierdurch kann der letzte Druckgang eingespart werden, wobei erst ein Kostenvergleich zu bedruckten Sichtfenstern (S) in Abhängigkeit der Stückzahl der zu fertigenden Anzeigen Auskunft über die gerade vorteilhaftere Fertigungstechnologie gibt. Die fertige Frontscheibe wird auf das Gehäuse der Anzeige geklebt oder mittels eines umlaufenden Scheibengummis gehalten. Letzteres findet beispielsweise bei nur von vorn zugänglichen Einbauräumen für die Anzeigen Anwendung, um eine Wartung ohne großen Aufwand zu ermöglichen.

Insgesamt wird durch die Erfindung eine kosten- und wartungsgünstige, alterungsbeständige sowie im Design ansprechende Anzeigeeinheit möglich, wobei durch die Sichtfenster (S) hindurch blendungsarm und gut erkennbar variable Anzeigen wie Linie, Stationsnamen, nächster Halt, die nächste Umsteigemöglichkeit und die Endhaltestelle aufleuchten.

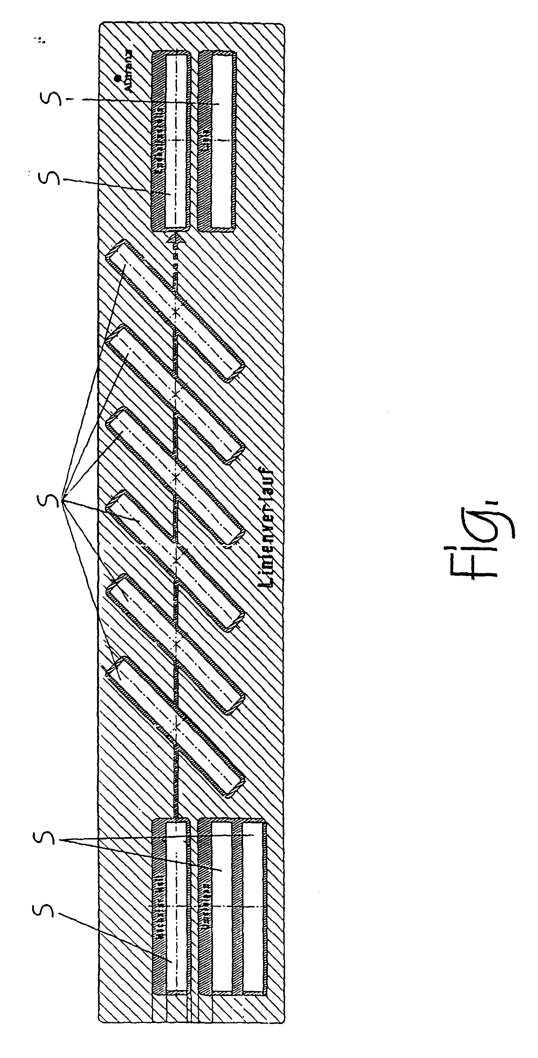

## Patentansprüche

1. LED-Anzeigeeinheit für den mobilen oder stationären Einsatz im Innen- oder Außenbereich, vorzugsweise LED-Linienverlaufsanzeige für den öffentlichen Personennahverkehr, wobei die Frontfläche der Anzeigeeinheit durch eine Klarsichtscheibe gebildet wird, die rückseitig zwecks Bildung eines sinnfälligen und gefälligen Layouts partiell mehrschichtig bedruckt ist, dadurch gekennzeichnet, daß die Sichtfenster (S) für die Display-Durchsicht - eine Kunststoffilterscheibe ersetzend - lichtdurchlässig getönt sind.

2. LED-Anzeigeeinheit nach Anspruch 1, dadurch gekennzeichnet, daß die Sichtfenster (S) lichtdurchlässig bedruckt sind.

3. LED-Anzeigeeinheit nach Anspruch 2, dadurch gekennzeichnet, daß die Sichtfenster (S) mit der Farbe RAL 9005 tiefschwarz und einer mittleren Lichtdurchlässigkeit bedruckt sind.

4. LED-Anzeigeeinheit nach einem der vorherigen Ansprüche, dadurch gekennzeichnet, daß die Frontscheibe im Siebdruck bedruckt ist.

5. LED-Anzeigeeinheit nach Anspruch 1, dadurch gekennzeichnet, daß eine eingefärbte Klarsichtscheibe die Tönung der Sichtfenster (S) liefert.

6. LED-Anzeigeeinheit nach einem der vorhergehenden Ansprüche, dadurch gekennzeichnet, daß die Frontscheibe aus Einscheiben-Sicherheitsglas besteht.

7. LED-Anzeigeeinheit nach einem der vorherigen Ansprüche, dadurch gekennzeichnet, daß die Frontscheibe auf das Gehäuse der Anzeige geklebt ist.

8. LED-Anzeigeeinheit nach einem der Ansprüche 1 bis 6, dadurch gekennzeichnet, daß die Frontscheibe in einem Dichtungsprofil des Gehäuses gefaßt ist.
